# EUROPEAN PATENT APPLICATION

(11) **EP 4 794 010 A1**
(43) Date of publication of application: **19.08.2026**
(21) Application number: 26157368.7
(22) Date of filing: 09.02.2026
(51) Int. Cl.: H01M 4/131, H01M 4/525

(54) **CATHODE ACTIVE MATERIAL, CATHODE FOR LITHIUM SECONDARY BATTERY, AND LITHIUM SECONDARY BATTERY**

(30) Priority: 18.02.2025 KR 20250020708; 28.01.2026 KR 20260017243
(71) Applicant: SK On Co., Ltd., Seoul 03161 (KR)
(72) Inventor: KWEON, Hee Jun, Daejeon 34124 (KR); JANG, Ji Hye, Daejeon 34124 (KR); CHOI, Ji Hoon, Daejeon 34124 (KR)
(74) Representative: Stolmár & Partner Patentanwälte PartG mbB

(57) **Abstract**

A cathode active material including: an active material 1 comprising secondary particles; and an active material 2 comprising single particles, wherein the active material 1 and the active material 2 have a bimodal particle diameter distribution, respectively, the active material 1 has an average particle diameter (D50) of 9 µm to 17 µm, and the active material 2 has an average particle diameter (D50) of 2.5 µm to 4 µm, is disclosed.

In some implementations, a cathode active material having high packing density may be provided.

## Description

### TECHNICAL FIELD

The disclosure and implementations disclosed in this patent document generally relate to a cathode active material, a cathode for a lithium secondary battery, and a lithium secondary battery.

### BACKGROUND

Recently, a large amount of research into electric vehicles (EV), which may replace vehicles using fossil fuels such as gasoline and diesel, one of the main causes of air pollution, has been undertaken, and as the power source of the electric vehicles (EV), a lithium secondary battery having high discharge voltage and output stability has mainly been used.

In order to improve performance of the lithium secondary battery, there is a need to develop a technology which may improve energy density, lifespan, and the like, of a cathode for the lithium secondary battery.

### SUMMARY

The present disclosure can be implemented in some embodiments to provide a high-density cathode active material having improved ion conductivity.

The present disclosure can be implemented in some embodiments to improve energy density of a cathode for a lithium secondary battery.

The present disclosure can be implemented in some embodiments to provide a lithium secondary battery having improved life performance.

In some embodiments of the present disclosure, a cathode active material includes: an active material 1 comprising secondary particles; and an active material 2 comprising single particles, wherein the active material 1 and the active material 2 have a bimodal particle diameter distribution, respectively, the active material 1 has an average particle diameter (D50) of 9 µm to 17 µm, and the active material 2 has an average particle diameter (D50) of 2.5 µm to 4 µm.

In some implementations, the active material 1 may include: an active material 1-1 (PC1); and an active material 1-2 (PC2) having a smaller average particle diameter (D50) than the active material 1-1, and the active material 2 may include: an active material 2-1 (SC1); and an active material 2-2 (SC2) having a smaller average particle diameter (D50) than the active material 2-1.

In some implementations, the active material 1-1 may have an average particle diameter (D50) of 12 µm to 20 µm.

In some implementations, the active material 1-2 may have an average particle diameter (D50) of 7 µm to 11 µm.

In some implementations, the active material 2-1 may have an average particle diameter (D50) of 4 µm to 7 µm.

In some implementations, the active material 2-2 may have an average particle diameter (D50) of 2 µm to 4 µm.

In some implementations, a weight of the active material 1 included in the cathode active material may be equal to or more than a weight of the active material 2 included in the cathode active material.

In some implementations, a weight ratio between the active material 1 and the active material 2 may be 5:5 to 9:1.

In some embodiments of the present disclosure, a cathode for a lithium secondary battery includes: a cathode current collector; and a cathode mixture layer disposed on at least one surface of the cathode current collector, wherein the cathode mixture layer includes an active material 1 comprising secondary particles and an active material 2 comprising single particles, the active material 1 and the active material 2 have a bimodal particle diameter distribution, respectively, the active material 1 has an average particle diameter (D50) of 9 µm to 17 µm, and the active material 2 has an average particle diameter (D50) of 2.5 µm to 4 µm.

In some implementations, the cathode mixture layer may have a mixture density of 3.6 g/cc or more.

In some implementations, an interface resistance between the cathode current collector and the cathode mixture layer may be 14.5 Ω·cm² or less.

In some implementations, the cathode mixture layer has a BET vacant space ratio of 1.1 cm²/g or less.

In some implementations, the cathode mixture layer may have a water contact angle of 75° or more.

In some embodiments of the present disclosure, a lithium secondary battery includes the cathode for a lithium secondary battery according to any one of the implementations described above.

The present disclosure can be implemented in some embodiments to provide a lithium secondary battery having improved life performance.

### BRIEF DESCRIPTION OF DRAWINGS

Certain aspects, features, and advantages of the present disclosure are illustrated by the following detailed description with reference to the accompanying drawings.

FIGS. 1A to 1D are drawings conceptually showing a structure in which a cathode active material is disposed in a cathode for a lithium secondary battery according to an implementation, respectively.

FIGS. 2 and 3 are images of cross sections of cathodes for a lithium secondary battery according to Examples 1 and 2, observed by a scanning electron microscope (SEM), respectively.

FIGS. 4 to 10 are images of cross sections of cathodes for a lithium secondary battery according to Comparative Examples 1 to 7, observed by a scanning electron microscope (SEM), respectively.

### DETAILED DESCRIPTION

As a demand for lithium secondary battery increases, a technology for manufacturing a cathode having excellent performance is being required. According to an implementation, in order to improve packing density by decreasing vacant space inside an electrode, a cathode for a lithium secondary battery may include a cathode active material having a bimodal particle diameter distribution.

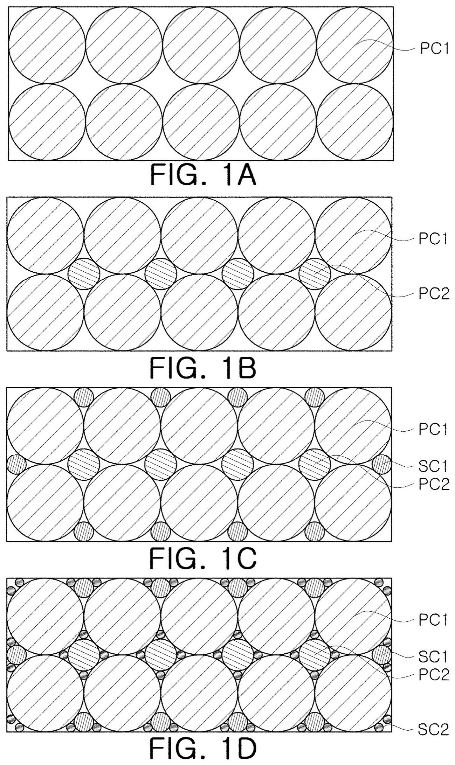

Specifically, when the cathode for a lithium secondary battery has a bimodal structure including an active material 1-1 (PC1) and an active material 1-2 (PC2) having different particle size (FIG. 1B), the vacant space inside the electrode may be decreased as compared with the cathode having a unimodal structure including only the active material 1-1 (PC1) (FIG. 1A).

Meanwhile, the cathode for a lithium secondary battery according to another implementation may include a cathode active material comprising secondary particles and a cathode active material comprising single particles by blending, in order to improve the mixture density and energy density per volume of an electrode.

The cathode active material comprising single particles breaks less in a rolling process and may have less side reactions with an electrolyte solution and less gassing therefrom even when the charge/discharge cycles of a battery are repeated. Therefore, when a cathode is designed by blending the cathode active material comprising secondary particles with the cathode active material comprising single particles, gassing in a battery may be reduced and durability may be enhanced.

In this regard, when the cathode for a lithium secondary battery includes the cathode active material comprising secondary particles having a bimodal particle diameter distribution (PC1 and PC2) and the cathode active material comprising single particles (SC1) by blending (FIG. 1C), vacant space inside a battery may be further decreased to greatly improve the packing density and the energy density of a cathode.

The cathode active material according to an implementation of the present disclosure includes an active material 1 comprising secondary particles; and an active material 2 comprising single particles, and since the active material 1 and the active material 2 have a bimodal particle diameter distribution, respectively, the energy density of a cathode may be greatly increased, and the life performance of a battery may also be greatly improved. Hereinafter, the above implementations will be described in detail, referring to FIG. 1D.

### Cathode active material

The cathode active material according to an implementation includes: an active material 1 comprising secondary particles; and an active material 2 comprising single particles, in which the active material 1 and the active material 2 have a bimodal particle diameter distribution, respectively, the active material 1 has an average particle diameter (D50) of 9 µm to 17 µm, and the active material 2 has an average particle diameter (D50) of 2.5 µm to 4 µm.

The average particle diameter (D50) may be a particle diameter value at a volume fraction of 50% when accumulated from the smallest particles in the particle size distribution of particles measured using a particle size analyzer (such as MT 3000 available from Microtrac) according to a laser diffraction method.

In the bimodal particle diameter distribution, two particle populations having different particle diameter distributions (D50) coexist in one particle group, and the distribution refers to a distribution in which two peaks are formed on a particle size distribution curve with the x-axis plotted on a linear scale. Herein, the two particle populations have independently defined average particle diameters (D50), respectively. The bimodal particle diameter distribution may be measured in the particle size distribution results measured in a particle diameter range of 1 to 30 µm.

Specifically, the active material 1 comprising secondary particles may have a bimodal particle diameter distribution including an active material 1-1 (PC1); and an active material 1-2 (PC2) having a smaller size than the active material 1-1, and the active material 2 comprising single particles may have a bimodal particle diameter distribution including an active material 2-1 (SC1); and an active material 2-2 (SC2) having a smaller particle size than the active material 2-1 (see FIG. 1D).

In some implementations, a ratio (D50_{1/}D50₂) of the average particle diameter (D50₁) of the active material 1 to the average particle diameter (D50₂) of active material 2 may be 2.5 to 6.5, 3 to 6, or 3.5 to 5.

In some implementations, the active material 1 may include: an active material 1-1 (PC1); and an active material 1-2 (PC2) having a smaller average particle diameter (D50) than the active material 1-1, and the active material 2 may include: an active material 2-1 (SC1); and an active material 2-2 (SC2) having a smaller average particle diameter (D50) than the active material 2-1.

In the present specification, a "secondary particle" may refer to a particle having a poly-crystal structure formed by assembly or agglomeration of a plurality of primary particles (single particles). For example, the "secondary particle" may refer to a particle having a structure formed by assembly or agglomeration of more than 10, 20 or more, 30 or more, 40 or more, or 50 or more primary particles.

In the present specification, a "single particle" may refer to a single particle (that is, primary particle) structure formed of one single crystal. Specifically, in the present specification, the "single particle" may be used in the meaning of excluding a particle having a structure formed by assembly or agglomeration of a plurality of primary particles (secondary particles). For example, the secondary particles having a structure formed by assembly or agglomeration of primary particles (for example, more than 10, 20 or more, 30 or more, 40 or more, 50 or more particles) may be excluded from the "single particles."

Meanwhile, in the present specification, for example, having a single body form by attaching or contacting 2 to 10 single particles without agglomeration is not excluded from the "single particle."

The crystal structure of the active material may be divided based on an ion image obtained by analyzing a particle cross-section by a focused ion beam (FIB). For example, when the active material is secondary particles, though it is observed as one particle in a scanning electron microscope (SEM) cross-section image, it may be observed as particles formed by assembly or agglomeration of two or more single particles depending on a difference in crystal orientation in FIB analysis image. Therefore, when two or more single particles depending on a difference in crystal orientation are not observed in the FIB analysis image, the active material may be determined to be single particles.

The active material 1 comprising secondary particles may have a larger average particle diameter (D50) than the active material 2 comprising single particles. Specifically, the active material 1 may have an average particle diameter (D50) of 7 µm to 20 µm, and the active material 2 may have an active material (D50) of 2.5 µm to 4 µm. More specifically, the active material 1 may have the average particle diameter (D50) of 9 µm or more or 11 µm or more and 17 µm or less or 15 µm or less. In addition, the active material 2 may have the average particle diameter (D50) of 2.6 µm or more, 2.8 µm or more, or 3.0 µm or more and 3.6 µm or less, 3.4 µm or less, or 3.2 µm or less.

When the average particle diameters (D50) of the active material 1 and the active material 2 are within the ranges described above, the surface tension and the water repellency of the cathode mixture layer may be increased, and thus, the energy density and the resistance characteristics of the cathode and the secondary battery may be improved.

In some implementations, the active material 1-1 may have an average particle diameter (D50) of 12 µm to 20 µm. Specifically, the active material 1-1 may have the average particle diameter (D50) of 14 µm or more and 17 µm or less. In addition, the active material 1-2 may have an average particle diameter (D50) of 7 µm to 11 µm. Specifically, the active material 1-2 may have the average particle diameter (D50) of 8 µm or more and 10 µm or less.

In some implementations, a ratio (D50_{1-1/}D50₁₋₂) of the average particle diameter (D50₁₋₁) of the active material 1-1 to the average particle diameter (D50₁₋₂) of the active material 1-2 may be 1.3 to 2.7, 1.3 to 2.5, or 1.3 to 2.

In some implementations, the active material 2-1 may have an average particle diameter (D50) of 4 µm to 7 µm. Specifically, the active material 2-1 may have the average particle diameter (D50) of 4 µm or more and 5 µm or less. In addition, the active material 2-2 may have an average particle diameter (D50) of 2 µm to 4 µm. Specifically, the active material 2-2 may have the average particle diameter (D50) of 2 µm or more and 3 µm or less.

In some implementations, a ratio (D50_{2-1/}D50₂₋₂) of the average particle diameter (D50₂₋₁) of the active material 2-1 to the average particle diameter (D50₂₋₂) of the active material 2-2 may be 1 to 3, 1.3 to 2.5, or 1.3 to 2.

In some implementations, a weight of the active material 1 included in the cathode active material may be equal to or more than a weight of the active material 2 included in the cathode active material. Specifically, the weight ratio between the active material 1 and the active material 2 may be 5:5 to 9:1. More specifically, the content of the active material 1 may be 65 wt% or more or 75 wt% or more and 85 wt% or less, based on the total weight of the active material 1 and the active material 2 included in the cathode active material. In addition, the content of the active material 2 may be 35 wt% or less or 25 wt% or less and 15 wt% or more, based on the total weight of the active material 1 and the active material 2 included in the cathode active material.

When the contents of the active material 1 and the active material 2 are adjusted as described above, the packing density and the durability of the cathode active material may be secured, and the energy density and the life performance of the cathode and the lithium secondary battery including the active material may be improved.

In some implementations, the active material 1 and the active material 2 may include a lithium transition metal oxide including a layered structure or crystal structure represented by the following Chemical Formula 1, respectively:

[Chemical Formula 1] LiₓNiₐCo_{b1}Mn_{b2}O_{2+z}

wherein 0.9≤x≤1.2, 0.6≤a≤0.99, 0.01≤b1+b2≤0.4, and -0.5≤z≤0.1.

The chemical structure represented by Chemical Formula 1 shows a bonding relationship included in the layered structure or crystal structure of the cathode active material, and Ni, Co, and Mn may be provided as a main active element of the cathode active material. That is, the chemical structure represented by Chemical Formula 1 is provided in order to express the bonding relationship of the main active element, and other additional elements are not excluded. Therefore, Chemical Formula 1 should be understood to be inclusive of introduction and substitution of an additional element.

In some implementations, auxiliary elements which are added to the main active elements to enhance chemical stability of the cathode active material or the layered structure/crystal structure may be further included. The auxiliary element may be incorporated into the layered structure/crystal structure to form a bond, and in this case also, should be understood to be included in the range of the chemical structure represented by Chemical Formula 1.

The auxiliary element may include, for example, at least one of Na, Mg, Ca, Y, Ti, V, Nb, Ta, Mo, W, Fe, Cu, Ag, Zn, B, Al, Ga, Si, Sn, Sr, Ba, Ra, P, or Zr. The auxiliary element may act as, for example, an auxiliary active element which contributes to the capacity/output activity of the cathode active material with Co or Mn, like Al.

In some implementations, the cathode active material may further include a coating material or a doping material containing a coating element or doping element. For example, elements which are substantially identical or similar to the auxiliary elements described above may be used as the coating element or doping element. For example, one or a combination of two or more of the auxiliary elements described above may be used as the coating element or doping element. In this case, the operating upper limit voltage of the lithium secondary battery may be adjusted to suppress voltage decay of the lithium secondary battery.

The coating element or doping element may be present on the surface of the particles of the cathode active material or may penetrate through the surface of the particles of the cathode active material to be included in the bonding structure represented by Chemical Formula 1.

In some implementations, the coating element may form a coating layer having a sea type or a coating layer having an island type.

In some implementations, the content of the coating element in the particles of the cathode active material may be 500 to 8,000 ppm, 1,000 to 8,000 ppm, or 1,500 to 8,000 ppm of the total weight of all elements except lithium and oxygen. When the content of the coating element is as described above, the initial capacity decrease and resistance increase of the lithium secondary battery may be prevented, and the voltage decay of the lithium secondary battery may be further suppressed.

In some implementations, the coating material may be formed by a dry coating method or a wet coating method. For example, the particles and a coating source of the cathode active material are dry blended or wet blended and then heat treated (for example, fired or dried) to form a coating material on the surface of the particles of the cathode active material. As the coating source, a coating source known in the art may be used. For example, the coating source may contain B, Al, W, Zr, Ti, Mg, Co, and the like.

In some implementations, the content of Ni in the lithium transition metal oxide (for example, a mole fraction of nickel of the total moles of nickel, cobalt, and manganese) may be 0.5 or more and 0.99 or less or 0.7 or less. Specifically, the content of Ni in the lithium transition metal oxide (for example, the mole fraction of nickel of the total moles of nickel, cobalt, and manganese) may be 0.55 or more and 0.65 or less. In this case, thermal stability may be excellent as compared with the lithium transition metal oxide having a Ni content of 0.7 or more.

The particle composition of the lithium transition metal oxide may be confirmed by inductively coupled plasma analysis. For example, the number of particles of the cathode active material is analyzed by ICP, and the number of oxygen atoms is normalized to 1.8 to 2.2 (for example, 2), thereby obtaining the chemical formula of the cathode active material.

### Cathode for lithium secondary battery

The cathode for a lithium secondary battery according to an implementation may include the cathode active material according to any one of the implementations described above. For example, the cathode for a lithium secondary battery may include a cathode current collector; and a cathode mixture layer disposed on at least one surface of the cathode current collector, in which the cathode mixture layer may include an active material 1 comprising secondary particles; and an active material 2 comprising single particles, the active material 1 and the active material 2 may have a bimodal particle diameter distribution, respectively, the active material 1 may have an average particle diameter (D50) of 9 µm to 17 µm, and the active material 2 may have an average particle diameter (D50) of 2.5 µm to 4 µm.

The component of the cathode current collector is not particularly limited. For example, the cathode current collector may be a plate or foil formed of one or more of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and an alloy thereof. In some implementations, the cathode current collector may be an aluminum (Al)-foil.

The thickness of the cathode current collector is not particularly limited. For example, the cathode current collector may have a thickness of 0.1 µm to 50 µm.

The structure of the cathode mixture layer is not particularly limited. For example, the cathode mixture layer may have a singlelayer structure or a multilayer structure including two or morelayered mixture layer.

The content of the cathode active material included in the cathode mixture layer is not particularly limited. For example, the content of the cathode active material included in the cathode mixture layer may be 80 wt% to 99 wt%.

In some implementations, the cathode mixture layer may further include a binder. The binder is not particularly limited. For example, the binder may include, for example, one or two or more of polyvinylidene fluoride, styrene butadiene rubber (SBR), polytetrafluoroethylene, vinylidene fluoride/hexafluoropropylene copolymer, polyacrylonitrile, polymethyl methacrylate, and the like. The content of the binder included in the cathode mixture layer is not particularly limited, and may be, for example, 0.1 wt% to 10 wt%, respectively.

In some implementations, the cathode mixture layer may further include a conducting material. The conducting material is not particularly limited. For example, the conducting material may include one or two or more of graphite such as natural graphite or artificial graphite; carbon-based materials such as carbon black, acetylene black, ketjen black, channel black, furnace black, lamp black, thermal black, carbon fiber, and carbon nanotubes (CNT); metal powder or metal fiber such as copper, nickel, aluminum, and silver; conductive whisker such as zinc oxide and potassium titanate; conductive metal oxides such as titanium oxide; conductive polymers such as a polyphenylene derivative, and the like. The content of the conducting material included in the cathode mixture layer is not particularly limited, and may be, for example, 0.1 wt% to 10 wt%, respectively.

In some implementations, the cathode mixture layer may have a mixture density of 3.6 g/cc or more. Specifically, the mixture density of the cathode mixture layer may be 3.7 g/cc or more or 3.8 g/cc or more and 5.0 g/cc or less, 4.5 g/cc or less, or 4.0 g/cc or less. The mixture density value may be a density value when the cathode mixture layer is rolled to the maximum.

In some implementations, an interface resistance between the cathode current collector and the cathode mixture layer may be 14.5 Ω·cm² or less. Specifically, the interface resistance between the cathode current collector and the cathode mixture layer may be 13.0 Ω·cm² or less, 12.0 Ω·cm² or less, or 11.0 Ω·cm² or less and 0.1 Ω·cm² or more, 1.0 Ω·cm² or more, or 5.0 Ω·cm² or more. The interface resistance value may be a contact resistance value between the cathode current collector and the cathode mixture layer, measured using an electrode resistance measurement system (RM2610) available from HIOKI for the cathode.

In some implementations, the cathode mixture layer has a BET vacant space ratio of 1.1 cm²/g or less. Specifically, the BET vacant space ratio of the cathode mixture layer may be 1.05 cm²/g or less or 1.0 cm²/g or less and 0.1 cm²/g or more or 0.5 cm²/g or more. The BET vacant space ratio value may be a vacant space ratio value calculated in cm²/g, using a nitrogen gas adsorption amount at a liquid nitrogen temperature (77 K) in accordance with a BET method. When the BET vacant space ratio of the cathode mixture layer is within the range described above, there were fewer vacant spaces inside the cathode mixture layer, so that the energy density may be determined to be excellent.

In some implementations, the cathode mixture layer may have a water contact angle of 75° or more. Specifically, the water contact angle of the cathode mixture layer may be 80° or more or 83° or more and 90° or less or 85° or less. The water contact angle may be an average value of each water contact angle measured after dropping 3 µl of water droplets 5 times on the surface of the cathode mixture layer with a micro-injector. In addition, the contact angle may be measured in accordance with the Young's equation which calculates the contact angle as a theta value, using 1) a surface free energy value of solid and liquid and 2) a solid/liquid interfacial free energy value.

When the water contact angle is within the range described above, the cathode mixture layer has high surface tension and water repellency, and this may be determined to have excellent cathode density and resistance characteristics.

The method of manufacturing the cathode for a lithium secondary battery is not particularly limited. For example, the cathode for a lithium secondary battery may be manufactured by applying a cathode slurry including the cathode active material according to any one of the implementations on at least one surface of the cathode current collector and then drying the slurry. The application method of the cathode slurry is not particularly limited. For example, the cathode slurry may be applied using a method such as bar coating, casting, or spraying. A drying temperature of the cathode slurry is not particularly limited. For example, the drying of the cathode slurry may be performed at 100°C to 200°C.

### Lithium secondary battery

The lithium secondary battery according to an implementation includes the cathode for a lithium secondary battery according to any one of the implementations described above. For example, the lithium secondary battery may include a unit cell including the cathode for a lithium secondary battery described above, an anode, and a separator The separator may be disposed between the cathode described above and the anode in the unit cell.

The anode is not particularly limited. For example, the anode may include an anode current collector; and an anode mixture layer on at least one surface of the anode current collector.

The component of the anode current collector is not particularly limited. For example, the anode current collector may be a plate or foil formed of one or more of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and an alloy thereof. In some implementations, the anode current collector may be a copper (Cu)-foil.

The thickness of the anode current collector is not particularly limited. For example, the anode current collector may have a thickness of 0.1 µm to 50 µm.

The anode mixed layer may include an anode active material. The anode active material is not particularly limited. For example, the anode active material may be one or more selected from the group consisting of a carbon-based material such as crystalline carbon, amorphous carbon, carbon composite, and carbon fiber; lithium metal; lithium alloy; a silicon-containing material, and a tin-containing material.

The crystalline carbon may be, for example, graphite-based carbon such as natural graphite, artificial graphite, graphitized coke, graphitized mesocarbon microbeads (MCMB), graphitized mesophase pitch-based carbon fiber (MPCF).

The amorphous carbon may be, for example, hard carbon, soft carbon, coke, mesocarbon microbeads (MCMB), or mesophase pitch-based carbon fiber (MPCF).

An element included in the lithium alloy may be, for example, aluminum, zinc, bismuth, cadmium, antimony, silicon, lead, tin, gallium, or indium.

The silicon-containing material is not particularly limited as long as it contains silicon, and may be an active material which may be alloyed with lithium (Li). For example, the silicon-containing material may be one or more selected from the group consisting of silicon (Si), silicon oxide (SiOₓ; 0<x<2), metal-doped silicon oxide (SiOₓ; 0<x<2), carbon-coated silicon oxide (SiOₓ; 0<x<2), siliconcarbon composite (Si-C), and silicon alloy.

The anode mixture layer may further include a binder. The binder is not particularly limited. For example, the binder may be any one of rubber-based binder such as styrene-butadiene rubber (SBR), fluorine-based rubber, ethylene propylene rubber, butadiene rubber, isoprene rubber, silane-based rubber; a cellulose-based binder such as carboxymethyl cellulose (CMC), hydroxypropyl methyl cellulose, methyl cellulose, or an alkali metal salt thereof; and a combination thereof.

The anode mixture layer may further include a conducting material. The conducting material is not particularly limited. For example, the conducting material may be one or more selected from particulate carbon materials and fibrous carbon materials. The particulate carbon material may be carbon black such as Super-P and Super-C, acetylene black, ketjen black, and the like, and the fibrous carbon material may be carbon fiber, carbon nanotubes (CNT), vapor grown carbon fiber (VGCF), and the like.

The separator is not particularly limited. For example, the separator may include a porous polymer film manufactured with a polyolefin-based polymer such as an ethylene homopolymer, a propylene homopolymer, an ethylene/butene copolymer, an ethylene/hexene copolymer, and an ethylene/methacrylate copolymer. In addition, the separator may include non-woven fabric formed with high-melting point glass fiber, polyethylene terephthalate fiber, and the like.

In some implementations, the lithium secondary battery may be manufactured by storing the unit cell described above in a pouch comprising a battery case and then injecting an electrolyte solution.

The electrolyte solution may include an organic solvent and a lithium salt. The organic solvent acts as a medium in which ions involved in an electrochemical reaction of a battery may move, and for example, may be carbonate-based, ester-based, ether-based, ketonebased, alcohol-based, or aprotic solvents alone or in combination of two or more, and a combination ratio when used in combination of two or more may be appropriately adjusted depending on battery performance to be desired.

The lithium salt is a material comprising dissolved in the organic solvent and acts as a source of lithium ions in the battery to allow basic operation of the lithium secondary battery, and promotes movement of lithium ions between a cathode and an anode. As the lithium salt, a known material may be used at a concentration appropriate for the purpose. The electrolyte solution may further include a known solvent for improvement of charge/discharge properties, flame retardancy properties, and the like, and may also further include a known additive.

In some implementations, the unit cell does not include a separator between a cathode and an anode, and may include a solid electrolyte. The solid electrolyte is not particularly limited, and may be, for example, an oxide-based solid electrolyte, a sulfide-based solid electrolyte, or a polymer-based solid electrolyte.

The present disclosure may also relate to the following numbered aspects:
Aspects 1) A cathode active material comprising: an active material 1 comprising secondary particles; and an active material 2 comprising single particles, wherein the active material 1 and the active material 2 have a bimodal particle diameter distribution, respectively, the active material 1 has an average particle diameter (D50) of 9 µm to 17 µm, and the active material 2 has an average particle diameter (D50) of 2.5 µm to 4 µm.
Aspect 2) In Aspect 1, The active material 1 includes an active material 1-1; and an active material 1-2 having a smaller average particle diameter (D50) than the active material 1-1, and the active material 2 includes an active material 2-1; and an active material 2-2 having a smaller average particle diameter (D50) than the active material 2-1.
Aspect 3), In Aspect 2, The active material 1-1 has an average particle diameter (D50) of 12 µm to 20 µm.
Aspect 4), In Aspect 2 or 3, The active material 1-2 has an average particle diameter (D50) of 7 µm to 11 µm.
Aspect 5), In anyone of Aspects 2 to 4, The active material 2-1 has an average particle diameter (D50) of 4 µm to 7 µm.
Aspect 6), In anyone of Aspects 2 to 5, The active material 2-2 has an average particle diameter (D50) of 2 µm to 4 µm.
Aspect 7), In anyone of Aspects 1 to 6, A weight of the active material 1 included in the cathode active material is equal to or more than a weight of the active material 2 included in the cathode active material.
Aspect 8), In anyone of Aspects 1 to 7, A weight ratio between the active material 1 and the active material 2 is 5:5 to 9:1.
Aspect 9), A cathode for a lithium secondary battery comprising: a cathode current collector; and a cathode mixture layer disposed on at least one surface of the cathode current collector, wherein the cathode mixture layer includes an active material 1 comprising secondary particles; and an active material 2 comprising single particles, the active material 1 and the active material 2 have a bimodal particle diameter distribution, respectively, the active material 1 has an average particle diameter (D50) of 9 µm to 17 µm, and the active material 2 has an average particle diameter (D50) of 2.5 µm to 4 µm.
Aspect 10), In Aspect 9, The cathode mixture layer has a mixture density of 3.6 g/cc or more.
Aspect 11), In Aspect 9 or 10, An interface resistance between the cathode current collector and the cathode mixture layer is 14.5 Ω·cm² or less.
Aspect 12), In anyone of Aspects 9 to 11, The cathode mixture layer has a BET vacant space ratio of 1.1 cm²/g or less.
Aspect 13), In anyone of Aspects 9 to 12, The cathode mixture layer has a water contact angle of 75° or more.
Aspect 14), A lithium secondary battery comprising the cathode for a lithium secondary battery any one of Aspect 9 to 13.

### Examples

### 1. Manufacture of cathode and secondary battery:

### 1) Manufacture of cathode for lithium secondary battery

### (1) Preparation of cathode active material

### <Example 1>

An active material 1 comprising secondary particles having a bimodal particle diameter distribution; and an active material 2 comprising single particles having a bimodal particle diameter distribution were blended at a weight ratio of 80:20 to prepare the cathode active material of Example 1 (see the following Table 1). Specifically, an NCM-based active material comprising secondary particles represented by the chemical formula of LiNi_{0.6}Co_{0.1}Mn_{0.3}O₂ having an average particle diameter (D50) of 13.2 µm was prepared as the active material 1, and an NCM-based active material comprising single particles represented by the chemical formula LiNi_{0.6}Co_{0.1}Mn_{0.3}O₂ having an average particle diameter (D50) of 3.5 µm was prepared as the active material 2.

At this time, the active material 1 had a bimodal particle diameter distribution including an active material 1-1 having an average particle diameter (D50) of 15 µm; and an active material 1-2 having an average particle diameter (D50) of 9 µm. In addition, the active material 2 had a bimodal particle diameter distribution including an active material 2-1 having an average particle diameter (D50) of 4 µm; and an active material 2-2 having an average particle diameter (D50) of 2.5 µm.

### <Example 2>

The cathode active material of Example 2 was manufactured in the same manner as in Example 1, except that an NCM-based active material comprising single particles represented by the chemical formula of LiNi_{0.6}Co_{0.1}Mn_{0.3}O₂ having an average particle diameter (D50) of 3.0 µm was prepared as the active material 2, and the active material 1 and the active material 2 were blended at a weight ratio of 70:30 (see the following Table 1).

At this time, the active material 1 had a bimodal particle diameter distribution including an active material 1-1 having an average particle diameter (D50) of 15 µm; and an active material 1-2 having an average particle diameter (D50) of 9 µm. In addition, the active material 2 had a bimodal particle diameter distribution including the active material 2-1 having an average particle diameter (D50) of 4 µm; and the active material 2-2 having an average particle diameter (D50) of 2 µm.

### <Example 3>

The cathode active material was manufactured in the same manner as in Example 1, except that the active material 1 having an average particle diameter (D50) of 9.3 µm and the active material 2 having an average particle diameter (D50) of 3.8 µm were used.

At this time, in the active material 1, the active material 1-1 had an average particle diameter (D50) of 12 µm, and the active material 1-2 had an average particle diameter (D50) of 7 µm, and in the active material 2, the active material 2-1 had an average particle diameter (D50) of 4.2 µm, and the active material 2-2 had an average particle diameter (D50) of 2.7 µm.

### <Example 4>

The cathode active material was manufactured in the same manner as in Example 1, except that the active material 1 having an average particle diameter (D50) of 16.4 µm and the active material 2 having an average particle diameter (D50) of 2.7 µm were used.

At this time, in the active material 1, the active material 1-1 had an average particle diameter (D50) of 19.5 µm, and the active material 1-2 had an average particle diameter (D50) of 10.7 µm, and in the active material 2, the active material 2-1 had an average particle diameter (D50) of 3.2 µm, and the active material 2-2 had an average particle diameter (D50) of 2.1 µm.

### <Example 5>

The cathode active material was manufactured in the same manner as in Example 1, except that the active material 1 having an average particle diameter (D50) of 12.5 µm and the active material 2 having an average particle diameter (D50) of 3.2 µm were used.

At this time, in the active material 1, the active material 1-1 had an average particle diameter (D50) of 16.8 µm, and the active material 1-2 had an average particle diameter (D50) of 6.6 µm, and in the active material 2, the active material 2-1 had an average particle diameter (D50) of 8.1 µm, and the active material 2-2 had an average particle diameter (D50) of 2.8 µm.

### <Example 6>

The cathode active material was manufactured in the same manner as in Example 1, except that the active material 1 having an average particle diameter (D50) of 12.9 µm and the active material 2 having an average particle diameter (D50) of 3.4 µm were used.

At this time, in the active material 1, the active material 1-1 had an average particle diameter (D50) of 21.0 µm, and the active material 1-2 had an average particle diameter (D50) of 3.8 µm, and in the active material 2, the active material 2-1 had an average particle diameter (D50) of 7.4 µm, and the active material 2-2 had an average particle diameter (D50) of 1.1 µm.

### <Comparative Example 1>

The active material 1 comprising secondary particles having a bimodal particle diameter distribution was prepared as the cathode active material of Comparative Example 1 (see the following Table 1). Specifically, the cathode active material of Comparative Example 1 included only the active material 1 comprising an NCM-based active material comprising secondary particles represented by the chemical formula of LiNi_{0.6}Co_{0.1}Mn_{0.3}O₂ having an average particle diameter (D50) of 13.2 µm, and the active material 1 had a bimodal particle diameter distribution including the active material 1-1 having an average particle diameter (D50) of 15 µm; and the active material 1-2 having an average particle diameter (D50) of 9 µm.

### <Comparative Example 2>

The active material 2 comprising single particles having a bimodal particle diameter distribution was prepared as the cathode active material of Comparative Example 2 (see the following Table 1). Specifically, the cathode active material of Comparative Example 2 included only the active material 2 comprising an NCM-based active material comprising single particles represented by the chemical formula of LiNi_{0.6}Co_{0.1}Mn_{0.3}O₂ having an average particle diameter (D50) of 3.8 µm, and the active material 2 had a bimodal particle diameter distribution including the active material 2-1 having an average particle diameter (D50) of 5.5 µm; and the active material 2-2 having an average particle diameter (D50) of 2 µm.

### <Comparative Example 3>

The active material 1 comprising secondary particles having a unimodal particle diameter distribution was prepared as the cathode active material of Comparative Example 3 (see the following Table 1). Specifically, the cathode active material of Comparative Example 3 included only the active material 1 comprising an NCM-based active material comprising secondary particles represented by the chemical formula of LiNi_{0.6}Co_{0.1}Mn_{0.3}O₂ having an average particle diameter (D50) of 11 µm.

### <Comparative Example 4>

The active material 2 comprising single particles having a unimodal particle diameter distribution was prepared as the cathode active material of Comparative Example 4 (see the following Table 1). Specifically, the cathode active material of Comparative Example 4 included only the active material 2 comprising an NCM-based active material comprising single particles represented by the chemical formula of LiNi_{0.6}Co_{0.1}Mn_{0.3}O₂ having an average particle diameter (D50) of 4.1 µm.

### <Comparative Example 5>

The active material 2 comprising single particles having a unimodal particle diameter distribution was prepared as the cathode active material of Comparative Example 5 (see the following Table 1). Specifically, the cathode active material of Comparative Example 5 included only the active material 2 comprising an NCM-based active material comprising single particles represented by the chemical formula of LiNi_{0.6}Co_{0.1}Mn_{0.3}O₂ having an average particle diameter (D50) of 5.0 µm.

### <Comparative Example 6>

The active material 2 comprising single particles having a unimodal particle diameter distribution was prepared as the cathode active material of Comparative Example 6 (see the following Table 1). Specifically, the cathode active material of Comparative Example 6 included only the active material 2 comprising an NCM-based active material comprising single particles represented by the chemical formula of LiNi_{0.6}Co_{0.1}Mn_{0.3}O₂ having an average particle diameter (D50) of 5.5 µm.

### <Comparative Example 7>

The cathode active material was manufactured in the same manner as in Example 1, except that the active material 1 having an average particle diameter (D50) of 8.6 µm and the active material 2 having an average particle diameter (D50) of 2.1 µm were used.

At this time, in the active material 1, the active material 1-1 had an average particle diameter (D50) of 11.3 µm, and the active material 1-2 had an average particle diameter (D50) of 6.5 µm, and in the active material 2, the active material 2-1 had an average particle diameter (D50) of 3.4 µm, and the active material 2-2 had an average particle diameter (D50) of 1.7 µm.

### <Comparative Example 8>

The cathode active material was manufactured in the same manner as in Example 1, except that the active material 1 having an average particle diameter (D50) of 18.5 µm and the active material 2 having an average particle diameter (D50) of 4.7 µm were used.

At this time, in the active material 1, the active material 1-1 had an average particle diameter (D50) of 23.8 µm, and the active material 1-2 had an average particle diameter (D50) of 14.1 µm, and in the active material 2, the active material 2-1 had an average particle diameter (D50) of 6.2 µm, and the active material 2-2 had an average particle diameter (D50) of 3.4 µm.

### (2) Manufacture of cathode

A cathode for a lithium secondary battery including the cathode active material prepared as described above was manufactured. Specifically, 95 wt% of the cathode active material, 2 wt% of a binder (polyvinylidene fluoride, PVDF), and 3 wt% of a conducting material (carbon black), based on the solid content, were blended with a solvent (N-methyl-2-pyrrolidone, NMP) to prepare a cathode slurry. The cathode slurry was applied on one surface of a cathode current collector (Al-foil) having a thickness of 10 µm at a loading level of 12 mg/cm², and dried at 100°C for 12 hours to manufacture a cathode in which a cathode mixture layer was disposed on one surface of a cathode current collector. The dried cathode was passed through roll press equipment to perform rolling. The rolling density (mixture density) of the manufactured cathode is as shown in the following Table 2, and the thickness of the cathode mixture layer after the rolling was 40 µm.

### 2) Manufacture of lithium secondary battery (manufacture of lithium secondary battery cathode half-cell)

The cathode manufactured as described above was cut into a circle having a diameter of 14 mm. Thereafter, the cathode was placed on a case of a 2032 standard coin-cell, a polyolefin separator having a diameter of 18 mm was placed thereon, an electrolyte solution in which 1 M LiPF₆ was dissolved in a solvent in which ethylene carbonate (EC) and diethyl carbonate (DEC) were blended was injected into the case, a Li-foil having a thickness of 0.4 mm and a diameter of 16 mm was placed on the separator, and a coil cell was assembled. The coin-cell lithium secondary battery cathode half-cell manufactured as described above was applied to a secondary battery samples of the examples and the comparative examples.

### 2. Evaluation of cathode

### 1) Interface resistance

The results of measuring interface resistance of the cathode for a lithium secondary battery manufactured as described above at room temperature (25°C) using an electrode resistance measurement system (RM2610) available from HIOKI are shown in the following Table 2. RM2610 may measure bulk resistance of the mixture layer and contact resistance between the mixture layer and the current collector separately, by applying a constant current on the surface of the electrode mixture layer and measuring and calculating a surface potential distribution formed by the current distribution.

2.7×10⁻⁶Ω·cm as a resistivity of the cathode current collector (Al-foil) was entered into the software program of RM2610, and the thickness of the cathode current collector (10 µm) and the thickness of the cathode mixture layer (40um) were entered. Thereafter, contact resistance between the cathode current collector and the cathode mixture layer was measured according to the Ohm's low (V=IR) while flowing a constant current to the cathode with a multiple probe.

### 2) BET vacant space ratio

The results of measuring a BET vacant space ratio using ASAP 2420 available from Micrometritics on the cathode for a lithium secondary battery manufactured as described above and using helium as a carrier gas and nitrogen as an adsorption gas are shown in the following Table 2. Specifically, the vacant space ratio of the cathode was calculated in the unit of cm²/g in accordance with the BET method, using a nitrogen gas adsorption amount at a liquid nitrogen temperature (77 K).

### 3) Water contact angle

The results of measuring the contact angle to water, using DSA100 available from KRUSS on the cathode for a lithium secondary battery manufactured as described above are shown in the following Table 2. Specifically, 3 µl of water droplets were dropped 5 times on the surface of the cathode mixture layer with a micro-injector at 25°C, each water contact angle was measured, and then the average value of each of the measured water contact angles was calculated.

At this time, the contact angle was measured in accordance with the Young's equation which calculates the contact angle as a theta value, using 1) a surface free energy value of solid and liquid and 2) a solid/liquid interfacial free energy value.

### 4) Cathode cross-section analysis

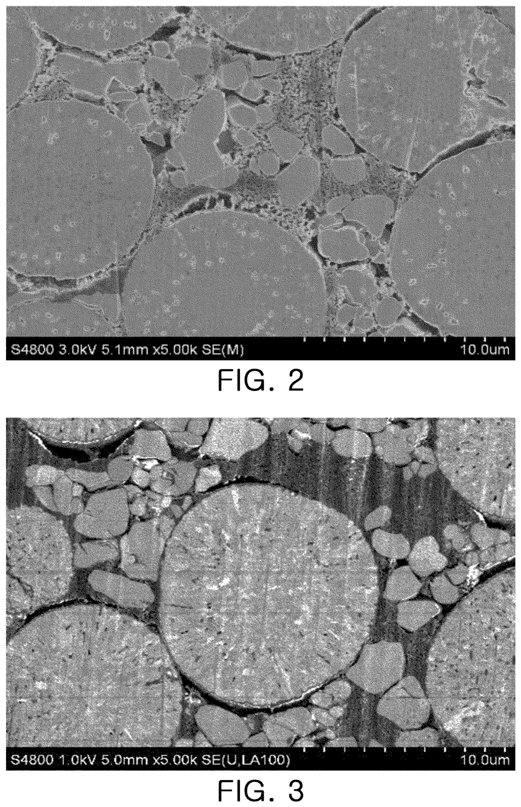

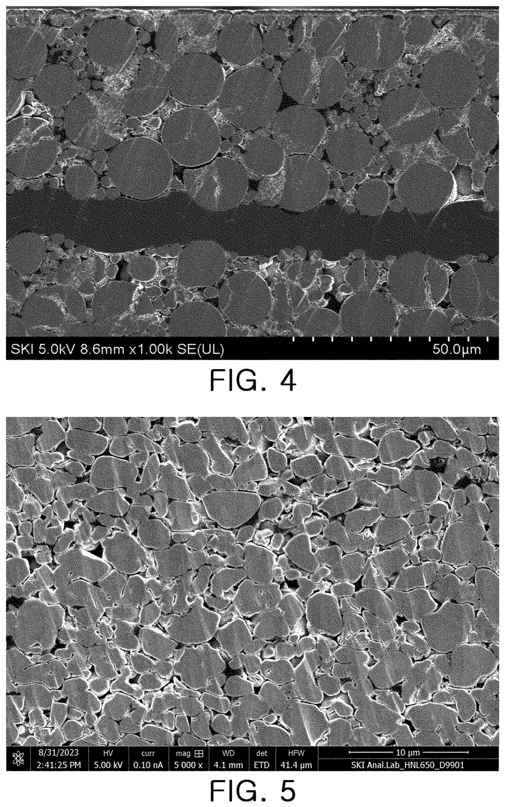

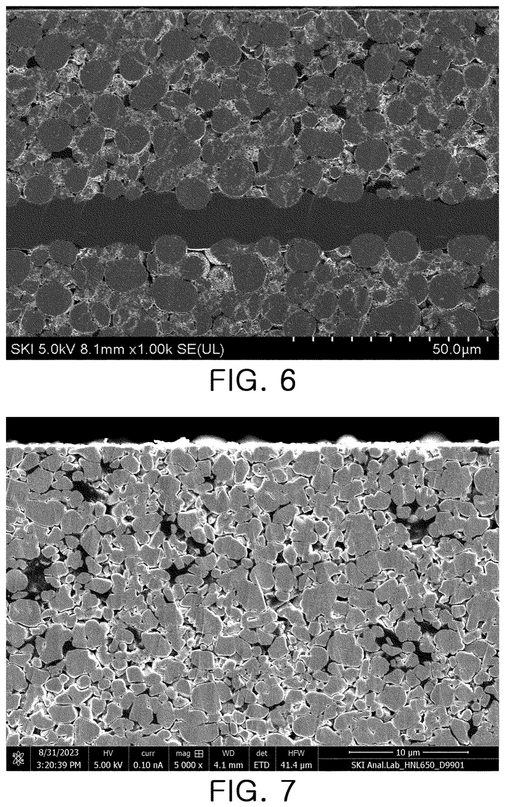

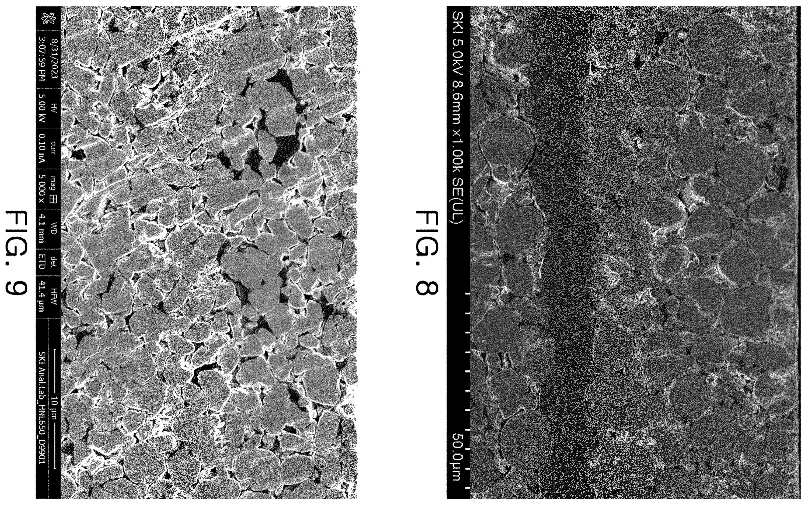

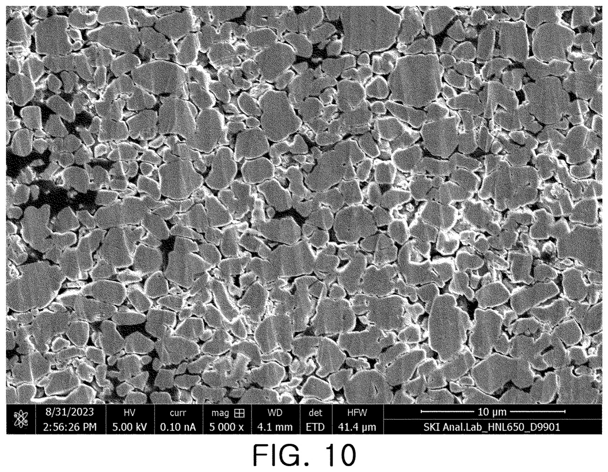

The images obtained by observing the cross sections of the cathodes for a lithium secondary battery of Examples 1 and 2 using a scanning electron microscope (SEM) are shown in FIGS. 2 and 3, respectively. In addition, the images obtained by observing the cross sections of the cathodes for a lithium secondary battery of Comparative Examples 1 to 6 using the scanning electron microscope (SEM) are shown in FIGS. 4 to 10.

### 3. Evaluation of secondary battery

### 1) Charge/ Discharge capacity

The lithium secondary batteries of the examples and the comparative examples manufactured as described above were formation charged/discharged, and then charged (CC-CV 0.1 C 4.5 V 0.05 C CUT-OFF) and discharged (CC 0.1 C 3.0 V CUT-OFF) once, respectively at room temperature (25°C), thereby measuring an initial charge capacity and an initial discharge capacity.

### 2) Charging/discharging efficiency

The results of calculating charging/discharging efficiency using the charge capacity and the discharge capacity measured in 1) are shown in the following Table 2. Specifically, the measured initial discharge capacity was divided by the measured initial charge capacity and multiplied by 100 to evaluate initial efficiency (%).

**[Table 1]**

| | **Cathode active material** | | | |
|---|---|---|---|---|
| | **Active material 1 (secondary particle)** | | **Active material 2 (single particle)** | |
| | **Particle diameter distribution** | **Average particle diameter (D50)** | **Particle diameter distribution** | **Average particle diameter (D50)** |
| **Example 1** | Bimodal | 13.2 µm | Bimodal | 3.5 µm |
| **Example 2** | Bimodal | 13.2 µm | Bimodal | 3.0 µm |
| **Example 3** | Bimodal | 9.3 µm | Bimodal | 3.8 µm |
| **Example 4** | Bimodal | 16.4 µm | Bimodal | 2.7 µm |
| **Example 5** | Bimodal | | Bimodal | 3.2 µm |
| **Example 6** | Bimodal | 12.9 µm | Bimodal | 3.4 µm |
| **Comparative Example 1** | Bimodal | 13.2 µm | - | - |
| **Comparative Example 2** | - | - | Bimodal | 3.8 µm |
| **Comparative Example 3** | Unimodal | 14 µm | - | - |
| **Comparative Example 4** | - | - | Unimodal | 4.1 µm |
| **Comparative Example 5** | - | - | Unimodal | 5.0 µm |
| **Comparative Example 6** | - | - | Unimodal | 5.5 µm |
| **Comparative Example 7** | Bimodal | 8.6 µm | Bimodal | 2.1 µm |
| **Comparative Example 8** | Bimodal | 18.5 µm | Bimodal | 4.7 µm |

**[Table 2]**

| | **Mixture density (g/cc)** | **Interface resistance (Ω·cm²)** | **BET vacant space ratio (cm²/g)** | **Water contact angle (°)** | **Charge capacity (mAh)** | **Discharge capacity (mAh)** | **Charging/ discharging efficiency (%)** |
|---|---|---|---|---|---|---|---|
| **Example 1** | 3.8 | 10.5 | 0.98 | 84 | 230.5 | 212.8 | 92.3 |
| **Example 2** | 3.7 | 12.3 | 1.02 | 80 | 230.2 | 211.4 | 91.8 |
| **Example 3** | 3.6 | 11.8 | 1.04 | 81 | 229.7 | 210.8 | 91.5 |
| **Example 4** | 3.6 | 12.4 | 1.07 | 81 | 228.4 | 209.5 | 91.4 |
| **Example 5** | 3.5 | 14.8 | 1.18 | 75 | 222.1 | 205.8 | 90.2 |
| **Example 6** | 3.5 | 15.2 | 1.11 | 77 | 225.3 | 204.6 | 90.7 |
| **Comparative Example 1** | 3.4 | 18.9 | 1.23 | 70 | 223.6 | 205.7 | 92.0 |
| **Comparative Example 2** | 3.2 | 30.8 | 1.45 | 67 | 218.9 | 200.3 | 91.5 |
| **Comparative Example 3** | 3.3 | 24.1 | 1.34 | 60 | 220.2 | 203.4 | 92.4 |
| **Comparative Example 4** | 3.0 | 35.2 | 1.56 | 58 | 215.5 | 200.6 | 93.1 |
| **Comparative Example 5** | 2.9 | 42.4 | 1.86 | 52 | 211.6 | 187.6 | 88.7 |
| **Comparative Example 6** | 2.7 | 50.6 | 2.01 | 45 | 210.8 | 185.5 | 88.0 |
| **Comparative Example 7** | 3.1 | 17.8 | 1.19 | 72 | 217.3 | 198.3 | 89.5 |
| **Comparative Example 8** | 3.0 | 18.1 | 1.18 | 73 | 213.5 | 192.6 | 88.1 |

Referring to Tables 1 and 2, it was confirmed that the cathodes manufactured with the active materials of the examples manufactured with the cathode active materials in which the active material 1 comprising secondary particles and the active material 2 comprising single particles had a bimodal particle diameter distribution, respectively had higher mixture density and lower interface resistance than the cathodes of the comparative examples. This is considered to be due to the fact that since the contact degree between the active material comprising secondary particles and the active material comprising single particles was high in the cathode of the examples having high packing density, the pathway of electron conduction was increased, dispersibility was uniform, and resistance was lowered.

Referring to FIGS. 2 and 3, it was confirmed that in the cathodes of Examples 1 and 2, the vacant space was filled with the cathode active material having different particle sizes, so that the vacant space inside the cathode was relatively less. In particular, in the cathode of Example 1 having higher mixture density than the cathode of Example 2, fewer vacant spaces were confirmed. However, referring to FIGS. 4 to 10, it was confirmed that in the cathodes of Comparative Examples 1 to 7, there were more vacant spaces inside the cathode than Examples 1 and 2.

Meanwhile, it was shown that the cathodes of Examples 1 to 6 had less BET vacant space ratios than those of Comparative Examples 1 to 8. Considering the results, it is considered that in the cathodes of Examples 1 to 6 having excellent packing degrees with less vacancy, since an area where the electrolyte solution penetrated into the electrode and reacted was small, a possibility to cause a side reaction was also low.

In addition, it was shown that the cathodes of Examples 1 to 6 had higher water contact angles of the mixture layer than the cathodes of Comparative Examples 1 to 8. Considering the results, it is considered that the cathodes of Examples 1 to 6 having high mixture density and lower interface resistance and BET vacant space ratio had high surface tension of the mixture layer and had water repellency.

Furthermore, it was confirmed that referring to Table 2, the lithium secondary battery including the cathode of Examples 1 to 6 had higher charge/discharge capacity than the lithium secondary batteries including the cathodes of Comparative Examples 1 to 8, and also had excellent charging/discharging efficiency. Considering the results, in the cathode having a high mixture density as in Examples 1 to 6, the contact degree between components such as an active material is high, the pathway in which lithium may move is sufficiently formed, and thus, the charge/discharge capacity and efficiency of the battery may be improved.

In particular, referring to Table 2, it was confirmed that the cathodes according to Examples 1 to 4 had the mixture density of 3.6 g/cc or more, the interface resistance of less than 13 Ω·cm², the BET vacant space ratio of less than 1.1 cm²/g, and the water contact angle of 80° or more, and the lithium secondary battery including the cathodes according to Examples 1 to 4 as such had excellent electrochemical performance with the charge capacity of about 230 mAh, the discharge capacity of about 210 mAh, and the charging/discharging efficiency of 91% or more.

### [Detailed Description of Main Elements]

PC1: Active material 1-1
PC2: Active material 1-2
SC1: Active material 2-1
SC2: Active material 2-2

According to an implementation of the present disclosure, a cathode active material having high packing density may be provided.

According to another implementation of the present disclosure, energy density of a cathode for a lithium secondary battery may be improved.

According to still another implementation of the present disclosure, life performance of a lithium secondary battery may be improved.

Only specific examples of implementations of certain embodiments are described. Variations, improvements and enhancements of the disclosed embodiments and other embodiments may be made based on the disclosure of this patent document.

## Claims

1. A cathode active material comprising: an active material 1 comprising secondary particles; and an active material 2 comprising single particles,
wherein the active material 1 and the active material 2 have a bimodal particle diameter distribution, respectively,
the active material 1 has an average particle diameter (D50) of 9 µm to 17 µm, and
the active material 2 has an average particle diameter (D50) of 2.5 µm to 4 µm.

2. The cathode active material of claim 1,
wherein the active material 1 includes an active material 1-1; and an active material 1-2 having a smaller average particle diameter (D50) than the active material 1-1, and
the active material 2 includes an active material 2-1; and an active material 2-2 having a smaller average particle diameter (D50) than the active material 2-1.

3. The cathode active material of claim 2, wherein the active material 1-1 has an average particle diameter (D50) of 12 µm to 20 µm.

4. The cathode active material of claim 2 or 3, wherein the active material 1-2 has an average particle diameter (D50) of 7 µm to 11 µm.

5. The cathode active material any one of claims 2 to 4, wherein the active material 2-1 has an average particle diameter (D50) of 4 µm to 7 µm.

6. The cathode active material any one of claims 2 to 5, wherein the active material 2-2 has an average particle diameter (D50) of 2 µm to 4 µm.

7. The cathode active material any one of claims 1 to 6, wherein a weight of the active material 1 included in the cathode active material is equal to or more than a weight of the active material 2 included in the cathode active material.

8. The cathode active material any one of claims 1 to 7, wherein a weight ratio between the active material 1 and the active material 2 is 5:5 to 9:1.

9. A cathode for a lithium secondary battery comprising: a cathode current collector; and a cathode mixture layer disposed on at least one surface of the cathode current collector,
wherein the cathode mixture layer includes an active material 1 comprising secondary particles; and an active material 2 comprising single particles,
the active material 1 and the active material 2 have a bimodal particle diameter distribution, respectively,
the active material 1 has an average particle diameter (D50) of 9 µm to 17 µm, and
the active material 2 has an average particle diameter (D50) of 2.5 µm to 4 µm.

10. The cathode for a lithium secondary battery of claim 9, wherein the cathode mixture layer has a mixture density of 3.6 g/cc or more.

11. The cathode for a lithium secondary battery of claim 9 or 10, wherein an interface resistance between the cathode current collector and the cathode mixture layer is 14.5 Ω·cm² or less.

12. The cathode for a lithium secondary battery any one of claims 9 to 11, wherein the cathode mixture layer has a BET vacant space ratio of 1.1 cm²/g or less.

13. The cathode for a lithium secondary battery any one of claims 9 to 12, wherein the cathode mixture layer has a water contact angle of 75° or more.

14. A lithium secondary battery comprising the cathode for a lithium secondary battery any one of claims 9 to 13.
